# EUROPEAN PATENT APPLICATION

(11) **EP 1 202 010 A1**
(43) Date of publication of application: **02.05.2002**
(21) Application number: 00940110.0
(22) Date of filing: 23.06.2000
(51) Int. Cl.: F25D 17/00

(54) **MULTI-FUNCTION THERMODYNAMIC DEVICE**

(30) Priority: 02.07.1999 CN 99109648
(71) Applicant: Hua, Hongsun, Haidian District, Beijing 100032 (CN)
(72) Inventor: Hua, Hongsun, Haidian District, Beijing 100032 (CN)
(74) Representative: Jannig, Peter, Dipl.-Ing.
(86) International application number: CN0000172
(87) International publication number: WO0102783

(57) **Abstract**

The invention relates to a multi-function thermodynamic device comprising a compressor, an evaporator, a condensor and an expansion valve. The evaporator and condensor are formed by at least a set of heat exchangers. A conversion valve is disposed on the outlet of the compressor, at least a set of heat exchangers is located in a water heater, at least a set of heat exchangers and fan assorting with which are disposed in the room, and the inlet of the water heater is connected to a ground water well. Since separate equipments are formed to an integrated system, the invention using a little of first energy of power, a majority of energy is replaced by regenerative energy from the system, it is effective to improve environmental pollution generated by consumable energy and to save considerably first energy of power.

## Description

### Field of the Invention

The present invention relates to a multifunctional thermal installation used to improve living conditions. This household multifunctional thermal installation is a multifunctional integrated system of air conditioning, heating, living hot water and energy storage.

### Background of the Invention

Although the speed of economic development in this century has reached an unprecedented level, people's level of living has been raised and living conditions have been improved, high-speed development brings social adverse effects that would have been neglected by the people until they pose risks to the ecological environment that are hard to be recovered. It is no doubt that the 21st century will be more developed than this century and the living conditions of the people in developing countries will be generally improved. But to improve living conditions for the people is at the cost of overmuch materials and the environment that it is required by relevant international treaties to recover within a limited period of time. Since developing countries are more populous than developed ones, if developing countries improves living conditions according to the present model, it will be a problem that whether well-to-do life can be reached. In fact, the environmental problem in our country has been placed on the agenda.

The situation in some of the developing countries is that most of the household installations use stand-alone systems, such as air conditioning, heating and living hot water. And these installations run on the consumption of non-renewable resources. From development point of view, the energy consumption for the household installations shall increase with the raising of living standard of the people. But if every one of the household installations run on the consumption of non-renewable resources, they shall give out directly or indirectly waste materials. These household installations that are placed in different families are not only large in quantity but also wide in distribution area that the macro social influence they bring cannot be neglected. Actually, the demand of energy resources for the household installations is very low, i.e. the temperature difference between them is generally 20-30°C, it is completely possible that most of the non-renewable energy resources can be replaced by low-grade ones. The installations that require large amount of energy resources in ordinary life include air-conditioners, living hot water supply equipment and heating equipment, and indirect energy demand for air-ventilators in the future will increase gradually. From the point of view of social resources that are individually occupied, the consumption model will not be developed sustainablly. So new energy resources must be found to cover the shortage of the non-renewable energy resources.

At present, although such household installations as aforementioned air-conditioners, heating equipment and living hot water supply equipment use the system of central production and supply in developed countries, they run on the consumption of non-renewable resources. Therefore, the amount of non-renewable resources consumed by the developed countries is much larger than those consumed by the developing countries, the harm they do to environment is also larger and the non-renewable resources they wasted is much more.

### Summary of the Invention

The object of the present invention is to provide a multifunctional thermal installation used to improve living conditions on the basis of the concept of sustainable development and ecological equilibrium. If the separate installations are made into an integrated system called multifunctional system, only a little amount of non-renewable energy resource is used can most of energy resources be replaced by the renewable energy resources collected from the system, so that the pollution that is brought by the consumption of energy resources can be reduced efficiently. Meanwhile, large amount of non-renewable energy resources can be saved and covered.

The object of the present invention is realized in this way. A multifunctional thermal installation including a compressor, an evaporator, a condenser and an expansion valve, of which the evaporator and the condenser at least comprise of a group of heat exchangers, wherein a switch valve is provided at the end of the outlet of the compressor; at least one group of the heat exchangers are disposed within the water heater, while another group of the heat exchangers together with their associated fans are disposed inside the room; the inlet of the water heater is connected to an underground well.

The switch valve at the outlet of the compressor of the present invention is connected to the heat exchanger inside the room to form a heat supply circulating device, however, the switch valve can also turn to the heat exchanger disposed in the water heater to form a refrigerating circulating device. Said water heater can be an enclosed water tank with a hot water outlet and said compressor can be disposed inside the water heater. The water inlet of the water heater can be connected to an underground well through a pump.

The operational principle of the mullifunctional thermal installation is as follows:
The multifunctional cold/hot air blower has also a fan and an evaporating/condensing heat exchanger as ordinary cold/hot air blowers do, and the structure of multifunctional water heater is substantially same to those of the ordinary ones. The compressor condensing process is used in the refrigeration and the reverse cycle of the said process is used in the heat supply of the multifunctional cold/hot air blower and no more description on the operational principle of the heat supply shall be made herein. The combined installation is a multifunctional integration of a multifunctional blower, a compressor and a multifunctional water heater. The multifunctional integration only consumes 10-20% of the absolute value of the total non-renewable energy resources of the system and other energy resources it needs come from alternate energy resources. This integrated system is called "multifunctional system".
1. When it is in the status of refrigeration, the refrigerating energy of cold air blower comes from the water heater, wherein the heating energy of the water heater comes from the cold air blower, the residual thermal energy of the water heater is output and stored in the underground well for use as the primary thermal energy in heating in winter.
2. When it is in the status of heating, the thermal energy of the hot air blower comes from the energy stored in the underground well in seasons that do not need heating, while the cold water of which the thermal energy has been absorbed by the hot air blower shall be stored in the underground well for use as the refrigeration source in summer.
3. The combined installation is an integrated accrete body of which the cold/hot air blower and the multifunctional water heater constitute a common thermal circulation after compensate each other, so its structure is compact.
4. Although the thermodynamic process of the combined installation still uses the circulating process of conventional compressors, the work condition of the combined installation is much lower than that of conventional air-conditioners, i.e. the seasonal energy-efficiency ratio (SEER) can reach 10 or grater that is more than two times of that of conventional air-conditioners, since the thermodynamic processes of two functions are combined into one in it.

For example, the condensing temperature of 40°C and evaporating temperature of 5°C is used in conventional air-conditioners with R22 as work medium, while the evaporating temperature used in the combined installation is more than 12°C and the condensing temperature is 20°C or even lower. The LGp-H circulation figure is attached for reference.

For users, since the previous set of air-conditioner is simplified into a cold/hot air blower without outdoor equipment and the previous boiler for supply of living hot water is simplified into an enclosed container, the space they occupy is reduced and they are convenient for use. TO replace the separate household thermal installations with the multifunctional installations can reduce more than half of the energy consumption per capita in developed countries. Since the efficiency of the industrial installations in developed countries has reached a high level, it is difficult to reduce the emission index of the greenhouse gases while civil installations are potential. So to replace the conventional separate installations with the multifunctional installations can efficiently reduce the emission index of the greenhouse gases in developed countries. Although the cost/performance ratio of the multifunctional installation is much higher than that of the conventional top-grade household appliances, it will be more advantageous if the multifunctional installations are promoted in developing countries using the one-step model, which avoids taking the road back using the development model of the developed countries. Since nearly 100 million sets of household appliances are needed in developing countries every year, the promotion of the multifunctional installation in these countries constitutes a large-scale system project of recovery of global warming. If conventional household appliances are still used, the greenhouse gases shall increase at an order of magnitude of 100 million tons per year.

### Brief Description of the Drawings

Fig.1 shows a block diagram of the first embodiment according to the present invention;
Fig.2 shows a block diagram of the second embodiment according to the present invention.

### Detailed Description of the Preferred Embodiments

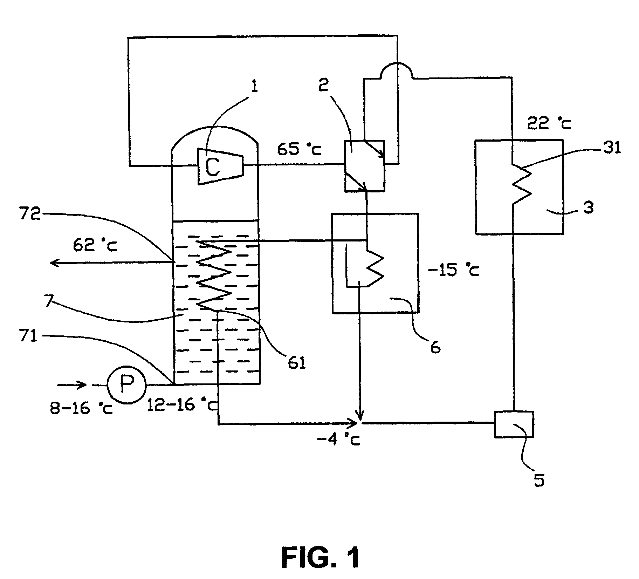

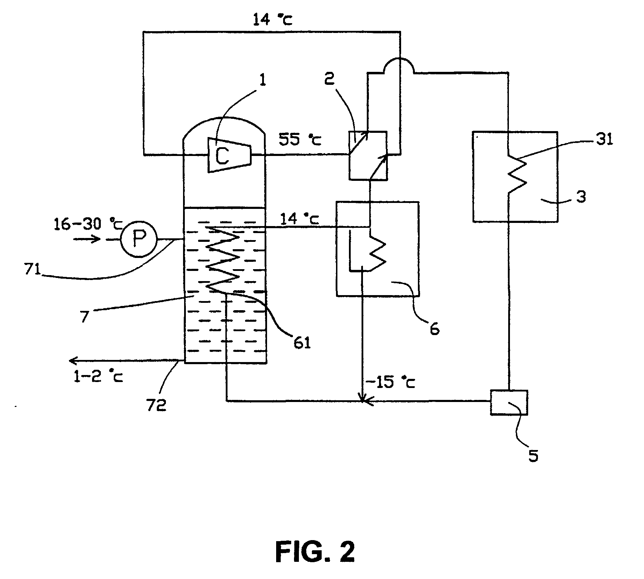

Referring to Figures 1 and 2, the present invention is a multifunctional installation mainly including a compressor 1, an evaporator 3 or 6, a condenser 6 or 3 and an expansion valve 5, wherein the evaporator and the condenser both include a group of heat exchangers 31 or 61 and a fan. At the outlet of the compressor 1 of the present invention there is provided an expansion valve 2 of which different changes can result in refrigerating system and heating system; wherein one group of the heat exchangers 61 are disposed in a water heater 7 and the other group 31 together with their corresponding fans are disposed inside the room; the water inlet of the water heater 7 is connected to a well.

The operational principle of the present invention is very simple, when refrigeration is needed, the water heater collects 12-16°C water from the underground well, the switch valve at the end of the outlet of the compressor 1 is connected to the heat exchanger 61 which is inside the water heater, the cryogen is changed into high-temperature saturated gas of more than 65°C after compressed by the compressor 1, then its temperature is lowered by the heat exchanger 61 after heat exchange with the low-temperature water in the water heater 7, and then the condensed cryogen enters the heat exchanger 31 inside the room to be evaporated and absorbs large amount of heat after being expanded by the expansion valve 5, thus the refrigeration process is finished. During this process, the heat exchanger 61 functions as a condenser and the heat exchanger 31 functions as an evaporator, so a cold air blower is formed. During the process of heat exchange, the low-temperature water in the water heater 7 shall be changed into 62°C hot water for use directly. Therefore, refrigerating energy of the cold air blower comes from the water heater 7 and the thermal energy of the water heater 7 comes from the cold air blower, the residual thermal energy of the water heater 7 can be stored in the underground well for use as the primary thermal energy for heating in winter.

The other work condition of the present invention is heating process as shown in Fig 2. The water heater 7 collects 16-30°C warm water that is stored in summer from the underground well, the switch valve at the end of the outlet of the compressor 1 is connected to the heat exchanger 31 which is inside the water heater, the cryogen is changed into high-temperature gas work medium of more than 55°C after compressed by the compressor 1, and then condensed by the heat exchanger 3 1 and gives out heat. Thus the heating process is finished. The condensed cryogen enters the heat exchanger 61 inside the room to be evaporated and absorbs heat after being expanded by the expansion valve 5. During this process, the heat exchanger 31 functions as a condenser and the heat exchanger 61 functions as an evaporator and thus a heating device is formed. During the process of heat exchange, the high-temperature water in the water heater 7 shall be changed into 1-2°C cold water and then be refilled in the underground well for use as the primary refrigerating energy in summer Therefore, the heating energy of the hot air blower mainly comes from the energy stored in the underground well in those seasons that need not heating, and the water from which the thermal energy has been absorbed by the hot air blower shall be stored in the underground well for use as the refrigerating energy in summer.

In summary the combined installation of the present invention is an integrated accrete body of which the cold/hot air blower and the multifunctional water heater constitute a common thermodynamic circulation after compensating each other, so the installation is compact in structure. Since the thermodynamic processes of two functions are combined into one in it, the work condition of the combined installation is much lower than that of conventional air-conditioners, i.e. the seasonal energy-efficiency ratio (SEER) can reach 10 or greater that is more than two times of that of conventional air-conditioners.

### Detailed Description of the Preferred Embodiments

### Embodiment 1

The structure shown in Fig. 1 is the first embodiment of the present invention. In this embodiment, the water heater 7 is an enclosed water container which is provided with a water inlet 71 that is connected to an underground well, from the well 8-16°C low-temperature water is pumped into the enclosed water heater 7 by the pump 8; the compressor 1 can also be disposed in the water heater 7, the switch valve 2 at the end of the outlet of the compressor 1 is connected to the heat exchanger 61 which is inside the water heater 7, after being compressed, the cryogen is changed into gas work medium with the high temperature of 65°C, and then the high-temperature gas work medium can lower the temperature efficiently after heat exchange with the low-temperature water in the water heater 7 through heat exchanger 61. The temperature of the cryogen of which the temperature has been lowered to -4°C shall be generally lowered to -15°C after expanded through the expansion valve 5, and then it enters the heat exchanger 31 which is inside the room to be evaporated and absorbs the heat in the room to finish the refrigerating process. In the circulation of the present embodiment, the heat exchanger 61 in the hot water heater 7 functions as a condenser and the heat exchanger 31 in the room functions as an evaporator. In the process of condensation, without any heating process using non-renewable energy source can the low-temperature water in the water heater be heated, since the cryogen shall give out large amount of heat. Thus the water of 62°C is obtained and flows out for use through the hot water outlet 72 disposed on the water heater 7. The residual hot water can be stored in the underground well for use as the primary thermal energy for heating in winter.

### Embodiment 2

Fig.2 shows the second embodiment of the present invention. In this embodiment, the water heater 7 is an enclosed water container which is provided with a water inlet 71 connected to an underground well, in the underground well there is warm water of 16-30°C that was stored in summer, and the warm water is pumped by the pump 8 into the water heater 7; the compressor 1 is disposed inside the water heater 7; the switch valve 2 at the end of the output of the compressor 1 is connected to the heat exchanger 31 in the room; the cryogen is changed into gas work medium of 55°C after being compressed and then exchanges heat with the low-temperature air in the room through the heat exchanger 31, thus a hot air blower is formed. The temperature of the air outlet of the hot air blower can reach 55°C, so the function for heating the room is realized. The cryogen of which the temperature has been lowered shall enter the heat exchanger 61 for evaporating and absorbing after it is lowered further to - 15°C by being expanded in expansion valve 5. Thus the water in the water heater is changed into low-temperature water of 1-2°C and then stored in the underground well for use as the primary refrigerating energy in summer. In the circulation of the present embodiment, the heat exchanger 61 inside the water heater 7 functions as an evaporator and the heat exchanger in the room functions as a condenser.

## Claims

1. A multifunctional thermal installation, which includes a compressor, an evaporator, a condenser and an expansion valve, said evaporator and condenser comprise at least a group of heat exchangers, wherein at the end of the outlet of the said compressor there is provided with a switch valve; at least one group of heat exchangers are disposed in the water heater and at least one group of heat exchangers together with their associated fan are disposed in the room; the water inlet of the water heater is connected to an underground well.

2. A multifunctional thermal installation as claim 1, wherein the switch valve at the end of the outlet of the said compressor is connected to the heat exchanger in the room to form a heating circulation system.

3. A multifunctional thermal installation as claim 1, wherein the switch valve at the end of the outlet of the said compressor is connected to the heat exchanger in the water heater to form a refrigeration circulation device.

4. A multifunctional thermal installation as claim 1, wherein the water heater can be an enclosed water container which is provided with a hot water outlet.

5. A multifunctional thermal installation as claim 1, wherein the compressor can be disposed in the water heater.

6. A multifunctional thermal installation as claim 1, wherein the water inlet of the water heater can be connected to a well by a pump.
